Europäisches Patentamt

European Patent Office

Office européen des brevets

(11) Veröffentlichungsnummer: **0 404 181**

**A1**

(12) **EUROPÄISCHE PATENTANMELDUNG**

(21) Anmeldenummer: 90111883.6

(22) Anmeldetag: 22.06.90

(51) Int. Cl.⁵: **F02B 77/13, B60R 13/08**

(30) Priorität: 22.06.89 DE 3920394

(43) Veröffentlichungstag der Anmeldung:
27.12.90 Patentblatt 90/52

(84) Benannte Vertragsstaaten:
**DE ES FR GB IT**

(71) Anmelder: **Klöckner-Humboldt-Deutz Aktiengesellschaft Deutz-Mülheimer-Strasse 111 Postfach 80 05 09 D-5000 Köln 80(DE)**

(72) Erfinder: **Flotho, Albert, Dr.-Ing. Im Weizenfeld 5 D-5060 Bergisch Gladbach 2(DE) Erfinder: Spessert, Bruno, Dr.-Ing. Burgherrenweg 61 D-5060 Bergisch Gladbach 1(DE)**

(54) Elastische Brennkraftmaschinen-und Kapsellagerung.

(57)

1. Elastische Brennkraftmaschinen- und Kapsellagerung

2.1 Bei einer bekannten derartigen Lagerung ist die Kapsel (2) über elastische Elemente (8) direkt an der Brennkraftmaschine (1) befestigt. Dadurch sind die elastischen Elemente (8) den in der Kapsel (2) auftretenden hohen Temperaturen ausgesetzt und dementsprechend verschleißempfindlich. Weiterhin verändern die elastischen Elemente (8) aufgrund der stark wechselnden Umgebungstemperaturen ihr Dämpfungsverhalten.

2.2. Bei der erfindungsgemäßen Ausbildung sind die elastischen Elemente (8) außerhalb der Kapsel (2) angeordnet und stützen sich auf Trägerarmen (3) der Brennkraftmashine (1) ab. Dadurch können die elastischen Elemente (8) auf ein optimales Dämpfungsvermögen abgeglichen werden. Da die Kapsel (2) die Bewegungen der Brennkraftmaschine (1) teilweise mitvollzieht, kann der Bauraum der Kapsel verkleinert werden.

EP 0 404 181 A1

## Elastische Brennkraftmaschinen- und Kapsellagerung

Die Erfindung betrifft eine Brennkraftmaschine gemäß dem Oberbegriff des Patentanspruchs 1.

Eine gattungsgemäße Brennkraftmaschine mit einer diese zumindest teilweise umgebenden Kapsel ist aus der DE-OS 20 65 889 bekannt. Diese Brennkraftmaschine ist über Trägerarme elastisch auf einem Fundament gelagert. Die Kapsel ist mittels mehrere elastischer Elemente direkt an der Brennkraftmaschine befestigt. Darüberhinaus ergeben sich insbesondere an den notwendigen Durchbrüchen für Versorgungs- und Entsorgungsleitungen und den Trägerarmen der Brennkraftmaschine durch die Kapsel Schallbrücken, da an diesen Stellen keine Schallisolierung vorgenommen wird. Besonders nachteilig an der dargestellten Ausführung ist aber die Anordnung der elastischen Elemente innerhalb der Kapsel. Durch diese Anordnung sind die elastischen Elemente den zumindest teilweise in der Kapsel Herrschenden sehr hohen Temperaturen beispielsweise in der Nähe der Abgasleitung ausgesetzt. Dementsprechend müssen die elastischen Elemente entsprechend wärmeresistend ausgebildet sein, wobei aber infolge der auftretenden großen Temperaturunter schiede in der Kapsel beispielsweise nach einem Kaltstart und einem anschließenden mehrstündigen Vollastbetrieb der Brennkraftmaschine diese unterschiedlichen Temperaturen nahezu zwangsläufig eine Veränderung des Dämpfungsverhaltens der elastichen Elemente bewirkten.

Der Erfindung liegt die Aufgabe zugrunde, eine Brennkraftmaschine mit einer die Brennkraftmaschine zumindest teilweise umgebenden Kapsel bereitzustellen, wobei das Dämpfungsverhalten der die Kapsel tragenden elastischen Elemente über weite Temperaturbereiche gleich ist.

Diese Aufgabe wird erfindungsgemäß dadurch gelöst, daß die elastischen Elemente zur Lagerung der Kapsel außerhalb dieser angeordnet sind. Dadurch sind die elastischen Elemente nicht den hohen Temperaturunterschieden in der Kapsel ausgesetzt und brauchen auch bezüglich ihrer Werkstoffwerte nicht mehr entsprechend der in der Kapsel maximal auftretenden Temperatur ausgelegt zu werden. Dies ist sowohl hinsichtlich der Haltbarkeit als auch hinsichtlich der Dämpfungskonstanz von Vorteil. Außerdem können bei Bedarf die elastischen Elemente sehr leicht ausgetauscht werden. Schließlich wird eine schwingungstechnische Optimierung der Lagerung durch Veränderung der Form und/oder Abmessungen der Lagerelemente erleichtert.

In Weiterbildung der Erfindung ist der jeweilige Durchbruchraum zwischen Trägerarm und Kapsel von einer elastisch verformbaren und schallisolierenden Abdeckung verschlossen. Dadurch wird einerseits eine weitere Reduzierung der von der Brennkraftmaschine ausgehenden Geräuschemission erreicht. Gleichzeitig wird ein unkontrolliertes Entweichen von Kühlluft verhindert.

Die zuvor beschriebene Weiterbildung ist besonders dann sinnvoll, wenn in Weiterbildung der Erfindung die elastischen Elemente auf den Trägerarmen abgestützt sind. Diese Ausbildung hat den Vorteil, daß die Kapsel relativ eng die Brennkraftmaschine umgeben kann, da die Kapsel die Auslenkungen der Brennkraftmaschine grundsätzlich mitvollzieht, und dadurch der Bauraum verkleinert werden kann.

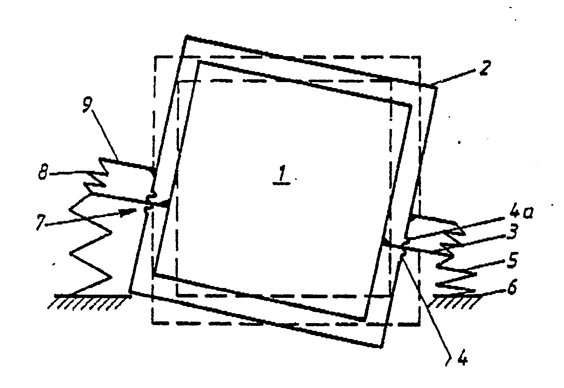

Weitere Vorteile der Erfindung sind der Zeichnungsbeschreibung zu entnehmen, in der ein in der Zeichnung dargestelltes Ausführungsbeispiel der Erfindung beschrieben ist.

Eine schematisch dargestellte Brennkraftmaschine 1 ist von einer Kapsel 2 umgeben. An der Brennkraftmaschine 1 sind Trägerarme 3 befestigt, die durch je einen Durchbruch 4 in der Kapsel 2 hindurchragen. An den Trägerarmen 3 greifen elastische Lagerelemente 5 an, die ihrerseits auf einem Fundament 6 befestigt sind. Der freie Durchbruchraum 4a zwischen den Trägerarmen 3 und der Kapsel 2 ist von einer elastisch verformbaren und schallisolierenden Abdeckung 7 verschlossen. Die Kapsel 2 ist über elastische Elemente 8, die in geeigneter Weise an der Kapsel, beispielsweise über einem Hilfsträger 9 befestigt sind, auf den Trägerarmen 3 abgestützt.

Dadurch führt die Kapsel bei einer Auslenkung der Brennkraftmaschine 1 aus ihrer Ruhelage (die Ruhelagen der Brennkraftmaschine und der Kapsel sind durch unterbrochene Linien dargestellt) im wesentlichen die gleichen Bewegungen wie die Brennkraftmaschine aus und die elastischen Elemente 8 können entsprechend optimal zur Verringerung der von der Brennkraftmaschine ausgestrahlten Geräuschemission ausgelegt werden.

## Ansprüche

1. Brennkraftmaschine mit einer die Brennkraftmaschine (1) zumindest teilweise umgebenden Kapsel (2), wobei die Kapsel (2) mittels elastischer Elemente (8) gelagert ist und die Brennkraftmaschine (1) über Trägerarme (3) und außerhalb der Kapsel (2) angeordnete elastische Lagerelemente (5) auf einem Fundament (6) festgelegt ist, dadurch gekennzeichnet, daß die elastischen Elemente (8) außerhalb der Kapsel (2) angeordnet sind.

2. Brennkraftmaschine nach Anspruch 1, dadurch gekennzeichnet, daß die Trägerarme (3) durch je einen Druchbruch (4) in der Kapsel (2) hindurchragen und der Durchbruchraum (4a) zwischen Trägerarm (3) und Kapsel (2) von einer elastisch verformbaren und schallisolierenden Abdeckung (7) verschlossen ist.

3. Brennkraftmaschine nach Anspruch 1 oder 2, dadurch gekennzeichnet, daß die elastischen Elemente (8) auf den Trägerarmen (3) abgestützt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-276738 (KHD) <br> * das ganze Dokument * | 1 | F02B77/13 <br> B60R13/08 |
| A | | 3 | |
| | --- | | |
| Y | DE-A-2509065 (VOLKSWAGENWERK AG) <br> * Seite 4, Absatz 3 - Seite 4, Absatz 5; Figur 1 * | 1 | |
| | --- | | |
| A | DE-U-8813201 (PELZER) <br> * das ganze Dokument * | 1 | |
| | --- | | |
| A | GB-A-2196059 (DAIMLER BENZ AKTIENGESELLSCHAFT) <br> * das ganze Dokument * | 1 | |
| | --- | | |
| A | GB-A-145062 (DAIMLER MOTOREN GESELLSCHAFT) <br> * das ganze Dokument * | 1 | |
| | ----- | | |

**RECHERCHIERTE SACHGEBIETE (Int. Cl.5 )**

F02B
B60R

Der vorliegende Recherchenbericht wurde für alle Patentansprüche erstellt

| Recherchenort | Abschlußdatum der Recherche | Prüfer |
|---|---|---|
| DEN HAAG | 06 SEPTEMBER 1990 | WASSENAAR G. |